(19) Europäisches Patentamt / European Patent Office / Office européen des brevets

(11) **EP 4 474 516 A1**

(12) **EUROPEAN PATENT APPLICATION**
published in accordance with Art. 153(4) EPC

(43) Date of publication:
**11.12.2024 Bulletin 2024/50**

(21) Application number: **22925053.5**

(22) Date of filing: **03.02.2022**

(51) International Patent Classification (IPC):
*C23C 2/12* (2006.01)     *C23C 2/40* (2006.01)
*C23C 2/02* (2006.01)     *C23C 2/26* (2006.01)
*C22C 21/10* (2006.01)     *B21D 22/00* (2006.01)

(52) Cooperative Patent Classification (CPC):
**B21D 22/00; C22C 21/10; C23C 2/02; C23C 2/12;
C23C 2/26; C23C 2/40**

(86) International application number:
**PCT/KR2022/001693**

(87) International publication number:
**WO 2023/149586 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **POSCO Co., Ltd
Pohang-si, Gyeongsangbuk-do 37859 (KR)**

(72) Inventors:
• **HWANG, Hyeon-Seok
Gwangyang-si, Jeollanam-do 57807 (KR)**
• **SHIN, Dong-Seok
Gwangyang-si, Jeollanam-do 57807 (KR)**
• **OH, Kkoch-Nim
Gwangyang-si, Jeollanam-do 57807 (KR)**
• **KIM, Myung-Soo
Gwangyang-si, Jeollanam-do 57807 (KR)**
• **HAN, Eun-Su
Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **PLATED STEEL SHEET FOR HOT PRESS FORMING HAVING EXCELLENT SURFACE
PROPERTIES AND METHOD FOR MANUFACTURING SAME**

(57)     The present invention relates to a plated steel sheet for hot press forming, having excellent surface properties, and a method for manufacturing same, and more specifically relates to a plated steel sheet for hot press forming, which has excellent production properties and corrosion resistance, and has excellent surface quality as the plating layer does not separate from the base material even after hot press forming, and a method for manufacturing same.

FIG. 1

EP 4 474 516 A1

## Description

Technical Field

The present disclosure relates to a plated steel sheet for hot press forming having excellent surface quality and a method for manufacturing the same.

Background Art

The use of high-strength steel is increasing, to reduce the weight of automobiles. However, high-strength steel has a problem in that it is difficult to form a product with a complex and precise shape as a material breaks during processing or springback occurs after processing. Hot press forming (HPF) is a method to solve these problems, and the application thereof has recently been expanding.

The steel sheet for hot press forming is generally easy to be formed as the steel sheet is press processed while heated to a temperature range of 800 to 950°C, and have an advantage of being able to increase the strength of a formed product when rapidly cooling in a mold. However, when the steel sheet is heated to a high temperature, oxidation may occur on a surface of the steel sheet, and accordingly, there may be a problem that a process to remove oxides on the surface of the steel sheet should be added after press forming. To prevent this, a plated steel sheet with an aluminum plating layer, a zinc plating layer, or a mixture of the aluminum plating layer and the zinc plating layer are used on the surface of the steel sheet as a material for hot press forming.

However, an aluminum plated steel sheet has a high melting point of an aluminum plating bath, so a lifespan of sink rolls used in the plating bath is only 3 to 4 days, so production thereof should be stopped periodically and the sink rolls should be replaced, so productivity is very poor. Since the lifespan of these sink rolls is inversely proportional to a temperature of the plating bath, it is important to lower the temperature of the plating bath. In addition, the aluminum plating layer has a problem of poor corrosion resistance due to lack of sacrificial corrosion resistance of the plating layer after hot press forming.

In order to improve this problem, attempts were made to increase productivity and improve the corrosion resistance of the plating layer by lowering the temperature of the plating bath by using galvanium, a mixture of zinc and aluminum, in the hot press process to increase a cycle of sink roll usage. The mixing of zinc lowers the temperature of the plating bath, increasing the productivity of plated steel sheet, and the corrosion resistance of the plating layer is improved compared to aluminum even after hot press forming due to zinc contained in the plating layer after plating.

However, the zinc-added aluminum plating layer has a problem in that the plating layer may be easily separated from the base material at curved areas in the mold after hot press forming, so it has not been able to meet the demand for high-quality steel materials requiring strict quality until now.

Therefore, there is a need to develop technology securing corrosion resistance and productivity and at the same time having excellent surface quality by preventing peeling of the plating layer from the base material during hot forming, but no technology has been developed that can meet the demand for high-quality products with good corrosion resistance, productivity, and surface quality until now.

(Patent Document 1) U.S. Patent Publication No. 6,296,805

Summary of Invention

Technical Problem

An aspect of the present disclosure is to provide a plated steel sheet for hot press forming having excellent surface quality, and a method for manufacturing the same.

Alternatively, another aspect of the present disclosure is to provide a plated steel sheet for hot press forming having excellent productivity and corrosion resistance, and excellent surface quality since a plating layer may not be separated from a base material even after hot forming, and a method for manufacturing the same.

The subject of the present invention is not limited to the above. The subject of the present invention will be understood from the overall content of the present specification, and those of ordinary skill in the art to which the present invention pertains will have no difficulty in understanding the additional subject of the present invention.

Solution to Problem

According to an aspect of the present disclosure, provided is a plated steel sheet for hot press forming, the plated steel sheet including:

a base steel; and
a plating layer on at least one surface of the base steel;
wherein the plating layer comprises by weight%: 21 to 34% of Zn, 6.3 to 15% of Si, 3 to 13% of Fe, with a balance of Al and other inevitable impurities, and
wherein the following Relational expressions 1 and 2 are satisfied.

$$[\text{Relational expression 1}]$$

$$0.09 \leq [Zn]/[Si] \leq 4.8$$

$$[\text{Relational expression 2}]$$

$$3.6 \leq [Al]/[Si] \leq 8.5$$

In Relational expressions 1 and 2, where [Zn] represents an average content, weight%, of Zn in the plating layer, [Si] represents an average content, weight%, of Si in the plating layer, and [Al] represents an average content, weight%, of Al in the plating layer.
According to another aspect of the present disclosure, provided is a method for manufacturing a plated steel sheet for hot press forming, the method comprising:

a plating operation of immersing a base steel in a plating bath comprising by weight%, 21 to 34% of Zn, 6.3 to 15% of Si, 2% or less (including 0%) of Fe, with a balance of Al and other inevitable impurities, wherein the following Relational expressions 1 and 2 are satisfied, to obtain a steel sheet having a hot-dip plating layer formed on the surface; and
based on a surface temperature of a hot-dip plating layer for the steel sheet, a cooling operation of cooling the steel sheet so that an average cooling rate Vc1 is 25 to 90°C/s in a first section in which the temperature is 630 to 530°C and an average cooling rate Vc2 is 3 to 15°C/s in a second section in which the temperature is 529 to 350°C.

$$[\text{Relational expression 1}]$$

$$0.09 \leq [Zn]/[Si] \leq 4.8$$

$$[\text{Relational expression 2}]$$

$$3.6 \leq [Al]/[Si] \leq 8.5$$

In Relational expressions 1 and 2, where [Zn] represents an average content (weight%) of Zn in the hot-dip plating layer, [Si] represents an average content (weight%) of Si in the hot-dip plating layer, and [Al] represents an average content (weight%) of Al in the hot-dip plating layer.
According to another aspect of the present disclosure,
provided is a hot press forming member obtained by hot press forming the above-described plated steel sheet for hot press forming is provided.
According to another aspect of the present disclosure, provided is a method for manufacturing a hot press forming member, the method including:

heat treating the above-described plated steel sheet for hot press forming at a temperature within a range of Ac3 to 950°C for 1 to 1000 seconds; and

hot press forming the heat-treated plated steel sheet for hot press forming using a mold.

According to another aspect of the present disclosure, provided is a method for manufacturing a hot press forming member, the method including:

heat treating the plated steel sheet for hot press forming obtained by the above-described method for manufacturing a plated steel sheet for hot press forming at a temperature within a range of Ac3 to 950°C for 1 to 1000 seconds; and hot press forming the heat-treated plated steel sheet for hot press forming using a mold.

Advantageous Effects of Invention

As set forth above, according to an aspect of the present disclosure, a plated steel sheet for hot press forming with excellent surface quality and a method for manufacturing the same may be provided.

In addition, according to another aspect of the present disclosure, a plated steel sheet for hot press forming having excellent productivity and corrosion resistance and excellent surface quality since a plating layer is not separated from a base material even after hot forming, and a method for manufacturing the same may be provided.

The various and beneficial advantages and effects of the present invention are not limited to the above-described contents, and may be more easily understood through description of specific embodiments of the present invention.

Brief description of drawings

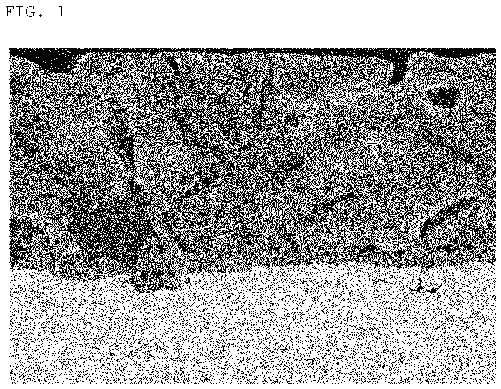

FIG. 1 is an image of Inventive Example 11 observed with a scanning electron microscope (SEM).

Best Mode for Invention

The terminology used in the present specification is only for describing specific embodiments of the present disclosure and it is not intended to limit the invention. Unless expressly used otherwise, singular forms of expression include plural forms.

The meaning of "including" used in the present specification specifies a configuration and does not exclude the presence or addition of another configuration.

Unless otherwise defined, all terms, including technical terms and scientific terms used in this specification, have the same meaning as commonly understood by those skilled in the art in the technical field to which the present invention pertains. Terms defined in the dictionary are interpreted to have meanings consistent with related technical literature and current disclosure.

In order to improve the problems of insufficient corrosion resistance and low productivity of an aluminum-plated steel sheet, which was mainly used as a conventional plated steel sheet for hot press forming, a Zn-Al-based plated steel sheet to which zinc and aluminum were added were developed.

However, although Zn-Al-based plated steel sheet has excellent corrosion resistance and productivity, there was a problem in that the addition of Zn causes a material destruction phenomenon called liquid metal embrittlement (LME). In addition, during hot forming, there was a problem in that a plating layer was easily separated from a base material in curved areas in a mold, resulting in poor adhesion.

Accordingly, the present inventors have conducted intensive research and then found that, in production of a plated steel sheet with a plating layer including components including Zn, Al, and Si, peeling of the plating layer is a major problem when aluminum primary crystals occur, and found that there is an effect of preventing LME and improving plating layer adhesion by precisely controlling the components of Zn, and Si, in addition to corrosion resistance and productivity, thereby completing the present disclosure.

Hereinafter, a plated steel sheet for hot press forming according to an aspect of the present disclosure will be described in detail.

The plated steel sheet for hot press forming according to the present disclosure includes a base steel; and a plating layer provided on at least one surface of the base steel. In this case, any type of base steel may be applied without limitations as long as it may be used as a steel sheet for hot press forming. Therefore, as the base steel, any steel sheet in which austenite transformation is initiated at a temperature of 800°C or higher, and in which martensite transformation can be performed by rapid cooling which occurs simultaneously with forming, is sufficient. As a representative example, base steel comprising by weight%: 0.15 to 0.39% of C, 0.5 to 3% of Mn, 0.01% or less (including 0%) of B, 0.1% or less of Ti (including 0%), with a balance of Fe and other inevitable impurities, may be used, and an example thereof may include 22MnB5.

In the present disclosure, the plating layer has a composition including, by weight%, 21 to 34% of Zn, 6.3 to 15% of Si, 3 to 13% of Fe, with a balance of Al, and other inevitable impurities. Hereinafter, the reason for which the components of each component are added and the reason for the content thereof is limited, will be described in detail. Unless otherwise particularly stated in the present disclosure, the content of each element is by weight %.

Zinc (Zn): 21 to 34%

Zinc (Zn) is an element added to improve corrosion resistance. Usually, since an aluminum-plated steel sheet does not have sacrificial corrosion resistance, corrosion resistance may be secured by adding zinc. In addition, zinc is added to improve productivity by lowering a melting point of a plating bath and improving a lifespan of a sink roll. Therefore, in the present disclosure, 21% or more of Zn is added to secure a desired level of corrosion resistance and productivity. However, if excessive Zn is added, there may be a risk in that liquid metal embrittlement (LME) may occur during hot press molding, so in the present disclosure, a Zn content is limited to 34% or less. However, from the viewpoint of further improving the desired effect of the present invention, a lower limit of the Zn content may preferably be 23%, more preferably 25%, and an upper limit of the Zn content may be 31.2%.

Silicon (Si): 6.3 to 15%

Silicon (Si) is an element added to control alloying of Al contained in a plating layer and Fe contained in base steel, and excessive alloying may be prevented by adding Si. In addition, Si is an element lowering a temperature of a plating bath by causing a decrease in a melting point of Al, thereby effectively suppressing occurrence of ash in the plating bath. Therefore, in the present disclosure, in order to properly control a degree of alloying between Al and Fe, Si is added in an amount of 6.3% or more. However, if a Sn content in the plating layer is less than 6.3%, a highly brittle Fe-Al-based interfacial alloy layer is formed too thick due to excessive alloying, which may cause brittleness to appear during processing and cause the plating layer to be dropped. However, if the Si content exceeds 15%, a melting point of a plating bath becomes excessively higher than a melting point of pure aluminum, which may cause plating equipment in the plating bath to deteriorate and reduce operability, so in the present disclosure, the Si content is limited to 15% or less. However, from the viewpoint of further improving the desired effect of the present disclosure, more preferably, a lower limit of the Si content may be 7.0%, and an upper limit of the Si content may be 13.1%.

Fe: 3 to 13%

A Fe content in the plating layer is preferably 3 to 13%. If the Fe content in the plating layer is less than 3%, Al in the plating bath and Fe in base steel form a non-uniform Al-Fe alloy phase on a surface of the base steel, which may cause a problem in that a plating surface becomes rough and plating defects increase. In addition, if the Fe content in the plating layer exceeds 13%, an excessive Fe-Al-based interfacial alloy layer is formed, and there is a risk that the plating layer may be dropped during processing due to the highly brittle Fe-Al-based interfacial alloy layer. In addition, the excessive Fe-Al-based interfacial alloy layer formed during plating plays a role in suppressing diffusion of Fe during a heat treatment process performed during hot press forming, so the plating layer remains in a liquid state for a long time, thereby causing a problem of sticking in a heating furnace. Therefore, in the present disclosure, the Fe content in the plating layer is controlled to 3 to 13%. However, from the viewpoint of further improving the desired effect of the present disclosure, more preferably, a lower limit of the Fe content may be 3.8%, and an upper limit of the Fe content may be 11.2%. Meanwhile, the small amount of Fe may be included in the plating bath, which may be due to a small amount of Fe flowing into the plating bath from base steel during the manufacturing process.

A remainder of Al and other inevitable impurities

In addition to the composition of the plating layer described above, a remainder may be Al and other inevitable impurities. Any inevitable impurities may be included as long as they can be unintentionally mixed during the manufacturing process of a normal aluminum-based or aluminum alloy-based plated steel sheet. Since the meaning of these impurities may be easily understood by those skilled in the art, the present disclosure does not specifically limit the meaning thereof.

Manganese (Mg): 1.4% or less

Although not particularly limited, the plating layer may optionally further include Mg in an amount of 1.4% or less to further improve corrosion resistance Mg may further improve corrosion resistance by acting as a buffer which prevents zinc oxide from being decomposed in a corrosive environment. Therefore, Mg may optionally be added in an amount of 1.4% or less. However, since Mg is an optional element, a lower limit of the Mg content may not be separately limited. As an example, the lower limit of the Mg content may be 0.05%.

Meanwhile, although the Zn-Al-based plated steel sheet has excellent corrosion resistance and productivity, there was a problem in that a material destruction phenomenon called liquid metal embrittlement (LME) due to the addition of Zn. The liquid metal embrittlement refers to a phenomenon in which zinc in the plating layer diffuses into base steel and brittle fracture occurs due to grain boundary cracking during the plating process or hot forming process. However, when a plated steel sheet with cracks connected from the plating layer to the base steel is used in an automobile member, the LME phenomenon should be suppressed in hot press formed parts since there is a risk that rigidity of a vehicle body may be weakened in the event of fatigue failure or vehicle collision due to accumulated stress that occurs during vehicle operation.

Generally, in the aluminum plating layer, the LME phenomenon does not occur, but the LME phenomenon easily occurs when zine is added. Accordingly, the present inventors have conducted in-depth studies, and as a result thereof, it was confirmed that the tendency of LME to occur varies depending on the combination of components between Al and Zn.

In addition, when Si is added along with Al and Zn to prevent alloying, it has a ternary composition, and in the process of solidifying after continuous plating to form a plating layer, as the combination of components of Al, Zn, and Si changes, it was additionally found that, when aluminum primary crystals occur, adhesion of the plating layer is mainly a problem.

That is, in order to simultaneously prevent the LME phenomenon and secure the adhesion of the plating layer in addition to securing the corrosion resistance and productivity desired in the present disclosure, it was confirmed that a relationship between three components including Al, Zn, and Si is precisely controlled as shown in Relational expressions 1 and 2 below is a very important factor.

Therefore, it is preferable that the plated steel sheet for hot press forming according to the present disclosure satisfies the following Relational expressions 1 and 2.

$$[\text{Relational expression 1}]$$

$$0.09 \leq [\text{Zn}]/[\text{Si}] \leq 4.8$$

$$[\text{Relational expression 2}]$$

$$3.6 \leq [\text{Al}]/[\text{Si}] \leq 8.5$$

In Relational expressions 1 and 2, [Zn] represents an average content, weight%, of Zn in the plating layer, [Si] represents an average content, weight%, of Si in the plating layer, and [Al] represents an average content, weight%, of Si in the plating layer.

Specifically, if a value of [Zn]/[Si] defined in Relational expression 1 above is less than 0.09, it may be difficult to secure the desired level of corrosion resistance. In addition, if the value of [Zn]/[Si] exceeds 4.8, even if the corrosion resistance of the plating layer is secured, there is a risk that the adhesion of the plating layer may decrease or an LME phenomenon may occur.

In addition, if a value of [Al]/[Si] defined in Relational expression 2 above is less than 3.6, a surface shape may become rough due to insufficient formation of smooth aluminum oxide on the surface after the heat treatment. In addition, if the value of [Al]/[Si] exceeds 8.5, an Fe-Al alloy phase with high brittleness resistance of the plating layer is generated after hot press forming, so that the plated steel sheet is processed into a blank to suit the part before hot press forming or there is a risk of plating peeling due to impact when transporting the steel sheet.

Meanwhile, according to an aspect of the present disclosure, the plating layer may include an Al-Zn-based plating layer; and a Fe-Al-based interfacial alloy layer provided between the Al-Zn-based plating layer and the base steel.

The Fe-Al-based interfacial alloy layer is a layer provided in contact with the base steel, and is a layer containing an intermetallic compound of Fe and Al formed through an alloying reaction of Fe and Al, and examples of the intermetallic compounds of Fe and Al may include $FeAl$, $FeAl_3$, $Fe_2Al_5$, and the like. In this case, matters commonly known in the art can be equally applied to the Fe-Al-based interfacial alloy layer. Therefore, the Fe-Al-based interfacial alloy layer may comprise, by weight%: 30 to 50% of Fe and 35 to 55% of Al, and may partially further comprise components that can be included in the plating layer such as Zn and Si, in addition to Fe and Al in weight% (for example, 27% or less of Si).

In other words, the Fe-Al-based interfacial alloy layer may comprise, by weight%: 30 to 50% of Fe, 35 to 55% of Al, 5 to 27% of Si, 4% or less (including 0%) of Zn, with a remainder and other inevitable impurities.

In addition, the Al-Zn-based plating layer may refer to a layer other than an Fe-Al-based suppression layer among the above-mentioned plating layers. That is, the Al-Zn-based plating layer may refer to a layer which is provided on the Fe-Al-based suppression layer, and distinguished from the Fe-Al-based suppression layer by content, among the plating layers formed when the hot-dip plating layer described later is solidified. Specifically, the Al-Zn-based plating layer may comprise, by weight%: 15 to 31% of Zn, 2 to 12 of Si, 10% or less of Fe, with a balance of Al and other inevitable impurities.

For example, when analyzing the plating layer with GDS, a point at which the Fe content is 50% is judged to be an interface between the base steel and the plating layer, since the thickness of the Fe-Al-based plating layer is less than 30% of that of the Al-Zn-based plating layer, a value of GDS, measured at a midpoint between the surface of the plating layer and the depth at which the Fe content is 50% may be determined as a component value of the composition of the Al-Zn plating layer, and the composition of the Fe-Al-based plating layer may be determined by an average value of the Fe-Al alloy layer by EDS analysis three or more times at a magnification of 1500 times or more using a scanning electron microscope.

According to an aspect of the present disclosure, a weight ratio (Sb/Sa) of the average Si content (Sb) in the Fe-Al-based alloy layer and the average Si content (Sa) in the Al-Zn-based plating layer may be 1 to 3.1. If the value of Sb/Sa is less than 1, an excessive Si phase is formed on an Al-Zn phase when the plating layer is solidified, and there is a risk of surface defects due to a hard Si phase on a surface of the plating layer. On the other hand, if the value of Sb/Sa is 3.1 or more, the Si content in the Fe-Al-based alloy layer is excessive, and Si penetrates into an Fe-Al-based crystal structure, thereby inhibiting a diffusion coefficient of Fe in the Fe-Al-based alloy layer, which may inhibit alloying of the initial plating layer during hot press forming, to cause problems such as sticking, or the like, and thus, there is a risk that adhesion of the plating may be impaired.

That is, the plated steel sheet for hot press forming is usually used in automobiles and is used after electrodeposition coating. However, if there is a severe difference in color on the surface or non-uniform oxides are generated during the heat treatment process, it becomes difficult to use the steel sheet for hot press forming as a part. These surface defects occur when the components present in the plating layer are not uniformly alloyed during the heat treatment process and different components are gathered locally. The present inventors have conducted in-depth studies, as a result thereof, have found that the uniform alloying described above may be achieved by controlling the value of Sb/Sa.

In addition, according to an aspect of the present disclosure, the plating layer may include a region in which the Si content is concentrated at 40% or more as compared to the average Si content of the Al-Zn-based plating layer per unit area of 100 $\mu m^2$ of the plating layer, based on a cross-section of the Al-Zn-based plating layer in the thickness direction. As described above, by including the region in which Si is concentrated, an Si phase concentrated at the interface at the beginning of the heat treatment and an Si phase concentrated in the plating layer may be simultaneously dissolved in molten aluminum, and a uniform Si content may be maintained throughout the plating layer, so that plating adhesion after hot press forming may be further improved.

In addition, according to an aspect of the present disclosure, the plating layer may include by area fraction, 3 to 30% of an Si phase, based on the cross-section of the Al-Zn-based plating layer in the thickness direction. In this case, the Si phase refers to a phase including by weight, 40 to 99.9% of Si.

In the present disclosure, it is controlled that the plating layer includes the Si phase in an amount about 3 to 30%, a dropping phenomenon resulting from a highly brittle Fe-Al-based interfacial alloy layer at the interface between the base steel before hot forming and the plating layer, and simultaneously, by including zinc, a peeling phenomenon of the plating layer, which easily occurs during hot forming may be prevented at the same time. Therefore, even if a plated steel sheet having a plating layer of a component system including Zn and Al is used for hot press forming, in addition to corrosion resistance, productivity, and LME prevention, the adhesion of the plating layer may be further improved.

In other words, hot press formed parts are mainly applied to parts with complex shapes and high strength compared to cold forming products. For this reason, deep processing is required to produce the products in complex shapes, and due to the nature of hot press forming, which requires deep processing and uses a lot of molds, apart from the dropping phenomenon caused by excessive formation of the highly brittle Fe-Al-based interfacial alloy layer due to friction and tolerance between the mold and the plating layer, there is a problem in that peeling of the plating layer is likely to occur after hot press forming is applied.

To date, no attention has been paid to the problem of the plating layer being easily separated after hot press forming, but the present inventors have conducted in-depth studies, and a result thereof, have found that it is possible to solve not only the dropping phenomenon caused by the base steel and the Fe-Al-based interfacial alloy layer, but also the problem of defects after forming parts which mainly occur in the Al-Zn-based plating layer and the Fe-Al-based interfacial alloy layer, by controlling conditions such as the above-described value of Sb/Sa, whether there is a region with the concentrated Si content (C), the area fraction of the Si phase, and the like.

Next, a method for manufacturing a plated steel sheet for hot press forming, which is another aspect of the present disclosure, will be described in detail. However, this does not mean that the plated steel sheet for hot press forming of the present disclosure should be manufactured by the following manufacturing method.

The plated steel sheet for hot press forming according to the present disclosure includes a plating step of immersing the base steel in a plating bath, comprising by weight%: 21 to 34% of Zn, 6.3 to 15% of Si, 2% or less (including 0%) of Fe, with a balance of Al and other inevitable impurities, wherein the following Relational expressions 1 and 2 are satisfied, to obtain a steel sheet with a hot-dip plating layer formed on the surface. In this case, the explanation for the above-mentioned plating layer can be applied in the same manner as to the reason for adding the component in the plating bath and the reason for limiting the content thereof. In other words, since the composition of the plating layer includes components derived from base steel, the components in the plating bath and the components may vary slightly. However, other than those derived from base steel, the reason for adding each component in the plating bath and the reason for limiting upper and lower numerical limits are the same.

[Relational expression 1]

$$0.09 \leq [Zn]/[Si] \leq 4.8$$

[Relational expression 2]

$$3.6 \leq [Al]/[Si] \leq 8.5$$

in the above Relational expressions 1 and 2, [Zn] represents an average content, weight%, of Zn in the hot-dip plating layer, [Si] represents an average content, weight%, of Si in the hot-dip plating layer, and [Al] represents an average content, weight%, of Al in the hot-dip plating layer.

Subsequently, although not particularly limited, according to an aspect of the present disclosure, after the plating step, the average cooling rate Vc1 is 25 to 90°C, cooling may be performed to have an average cooling rate Vc1 of 25 to 90°C/s in a first section with a temperature of 630 to 530°C, and an average cooling rate Vc2 of 3 to 15°C in a second section with a temperature of 529 to 350°C, based on a surface temperature of a hot-dip plating layer for the steel sheet. In this case, during the cooling, it may be controlled to satisfy the following Relational expression 3.

[Relational expression 3]

$$Vc2 \leq Vc1/7$$

As described above, by precisely controlling the cooling rate of the hot-dip plating layer after the plating step, the surface quality of the plating layer can be improved.

Specifically, by greatly controlling the cooling rate in the first section to 25 to 90°C/s, a size of aluminum-specific spangles becomes smaller and finer at the time of solidification of the plating layer, resulting in uniform surface roughness and improved surface quality. In addition, in the second section, by controlling the average cooling rate to be as low as 3 to 15°C/s, an amount of blowing air from a cooling tower may be reduced so that incorporation of foreign substances into the plating layer may be reduced.

In addition, according to an aspect of the present disclosure, before the plating step, the base steel may be heat treated in an annealing furnace in which the temperature is 650 to 850°C and a hydrogen ratio is 0.1 to 30%. The heat treatment may be performed at a temperature above recrystallization temperature to prevent work hardening of the material in a continuous plating process, and plating properties may be improved by maintaining the base steel sheet at a higher temperature than the plating bath. If the heat treatment temperature is lower than 650°C, there is a disadvantage in that the material may deform and meander due to work hardening when passing through a roll such as a continuous process. In addition, if the heat treatment temperature is higher than 850°C, Mn and Si present in the base steel sheet may be concentrated on the surface of the base steel sheet to form oxides, thereby deteriorating the properties. Therefore, the heat treatment temperature before the plating is preferably controlled to 650 to 850°C, more preferably, a lower limit of the heat treatment temperature may be 700°C, and an upper limit of the heat treatment temperature may be 810°C.

In addition, the heat treatment can be controlled in a reducing atmosphere in which the hydrogen ratio is 0.1 to 30% and a balance thereof is nitrogen gas. If high-purity nitrogen gas is not used, it may be difficult to maintain a reducing atmosphere in a heat treatment furnace, making it difficult to clean the surface of the base steel sheet. In this case, if 0.1% or more of hydrogen gas is added, a dew point in the heat treatment furnace may be lowered and a reducing atmosphere may be maintained to prevent further oxidation of base steel, and to clean the surface of the base steel sheet. However, if a fraction of the hydrogen gas exceeds 30%, there is a risk of explosion due to a heat treatment due to contact with oxygen when leaking into the atmosphere. Therefore, in the present disclosure, the hydrogen ratio during the heat treatment can be controlled to 0.1 to 30%, and more preferably, a lower limit of the hydrogen ratio may be 5%, and an upper limit of the hydrogen ratio may be 25%.

In this case, although not particularly limited, the annealing may be performed in an atmosphere with a dew point temperature of -30 to -60°C. If the dew point temperature during the annealing is lower than -30°C, a sufficient reducing atmosphere cannot be created, which may cause problems with reducibility of Fe oxides generated on the surface. If the dew point temperature is higher than -60°C, the use of high-purity nitrogen to maintain a clean atmosphere can cause a problem which results in high costs.

According to an aspect of the present disclosure, the temperature of the plating bath may be controlled to be from Tb+20°C to Tb+80°C, based on a melting point of the plating bath (Tb). If the temperature of the plating bath is lower than Tb+20°C, the plating bath may harden at locations in which heat can be discharged to the outside, such as the sink roll, within a plating pot, and overall, at low temperatures, there may be a problem of lowered fluidity. In addition, if the temperature of the plating bath exceeds Tb+80°C, a roll replacement cycle may be shortened due to equipment deterioration due to the high temperature of the plating bath, and operation may become difficult due to high temperatures. Therefore, in the present disclosure, it is preferable to control the temperature of the plating bath within the range of Tb+20°C to Tb+80°C.

In addition, another aspect of the present disclosure is to provide a hot press forming member obtained by hot press forming the above-described plated steel sheet for hot press forming.

In addition, according to another aspect of the present disclosure, a method for manufacturing a plated steel sheet for hot press forming is provided, the method including heat treating the plated steel sheet for hot press forming obtained by the above-described method for manufacturing a plated steel sheet for hot press forming at a temperature within a range of Ac3 to 950°C for 1 to 1000 seconds; and

hot press forming the heat-treated plated steel sheet for hot press forming using a mold.

However, matters commonly known in the technical field can be applied to the hot press forming member and the manufacturing method thereof without limitation. Therefore, in the present specification, these are not specifically limited.

Mode for Invention

(Example)

Hereinafter, the present disclosure will be described in more detail through examples. It should be noted that the following examples are only for understanding of the present invention, and are not intended to specify the scope of the present invention. The scope of the present invention may be determined by the matters described in the claims and the matters reasonably inferred therefrom.

(Experimental example 1)

Base steel comprising by weight%: 0.23% of C, 1.3% of Mn, 0.002% of B, 0.03% of Ti, 0.25% of Si, 0.15% of Cr, with a balance of Fe and other impurities was prepared. The base steel was heat treated at a temperature of 750°C in an annealing furnace with a dew point temperature of -50°C and a mixed atmosphere of 5% hydrogen and 95% nitrogen, and then immersed in a plating bath under the conditions shown in Table 1 below to form a hot-dip plating layer on a surface of the base steel. Thereafter, under the conditions shown in Table 1 below, a plating amount per side was controlled by treatment with an air knife and then cooled to manufacture a plated steel sheet for hot press forming.

[Table 1]

| No. | Plating bath composition [wt%] (a remainder of impurities) | | | | Plating bath melting point (Tb) [°C] | Plating bath temperature [°C] | Plating amount per side [g/m²] |
|---|---|---|---|---|---|---|---|
| | Al | Zn | Si | Fe | | | |
| Comparati ve Example 1 | 77 | 16.5 | 5.7 | 0.7 | 587 | 620 | 94 |
| Comparati ve Example 2 | 73 | 22.1 | 4.1 | 0.6 | 585 | 620 | 123 |
| Comparati ve Example 3 | 67 | 27.5 | 4.7 | 0.7 | 567 | 610 | 93 |
| Comparati ve Example 4 | 72 | 25.4 | 2.0 | 0.8 | 594 | 620 | 102 |
| Comparati ve Example 5 | 73 | 25.9 | 1.1 | 0.2 | 600 | 630 | 106 |
| Comparati ve Example 6 | 65 | 29.2 | 5.6 | 0.6 | 555 | 590 | 43 |
| Comparati ve Example 7 | 65 | 29.5 | 5.0 | 0.5 | 559 | 590 | 61 |
| Comparati ve Example 8 | 59 | 38.0 | 2.0 | 0.8 | 565 | 600 | 81 |
| Comparati ve Example 9 | 70 | 20.8 | 9.0 | 0.2 | 561 | 600 | 62 |
| Comparati ve Example 10 | 79 | 20.2 | 0 | 0.8 | 621 | 650 | 63 |
| Inventive Example 1 | 70 | 22.6 | 6.7 | 0.5 | 563 | 620 | 37 |
| Inventive Example 2 | 69 | 21.5 | 9.3 | 0.5 | 568 | 630 | 39 |
| Inventive Example 3 | 64 | 27.0 | 8.1 | 0.8 | 558 | 600 | 58 |

(continued)

| No. | Plating bath composition [wt%] (a remainder of impurities) | | | | Plating bath melting point (Tb) [°C] | Plating bath temperature [°C] | Plating amount per side [g/m²] |
|---|---|---|---|---|---|---|---|
| | Al | Zn | Si | Fe | | | |
| Inventive Example 4 | 64 | 27.0 | 8.1 | 0.8 | 558 | 600 | 98 |
| Inventive Example 5 | 61 | 26.1 | 12.5 | 0.6 | 639 | 670 | 60 |
| Inventive Example 6 | 61 | 32.0 | 6.8 | 0.7 | 539 | 590 | 93 |

After manufacturing specimens for each plated steel sheet for hot press forming obtained from the method shown in Table above, an alloy composition of a plating layer was analyzed. Specifically, the alloy composition of the plating layer was first dissolved with a NaOH solution for 10 minutes to remove an aluminum oxide film present on the surface, and then the plating layer was dissolved for 30 minutes using an HCI solution and inhibitor and the two dissolved solutions were combined and measured through inductively coupled plasms optical emission spectroscopy (ICP-OES), which were shown in Table 2 below.

[Table 2]

| No. | Plating layer composition [wt%] | | | | | |
|---|---|---|---|---|---|---|
| | Al | Zn | Si | Fe | [Zn]/[Si] | [Al]/[Si] |
| Comparative Example 1 | 77.6 | 14.9 | 4.2 | 3.3 | 3.5 | 18.5 |
| Comparative Example 2 | 69.4 | 24.0 | 3.8 | 2.8 | 6.3 | 18.3 |
| Comparative Example 3 | 67.4 | 26.3 | 3.6 | 2.7 | 7.3 | 18.7 |
| Comparative Example 4 | 72.5 | 17.3 | 2.5 | 7.7 | 6.9 | 29.0 |
| Comparative Example 5 | 73.9 | 17.0 | 1.5 | 6.6 | 11.3 | 49.9 |
| Comparative Example 6 | 58.1 | 32.3 | 5.9 | 3.7 | 5.5 | 9.8 |
| Comparative Example 7 | 63.3 | 26.5 | 5.6 | 4.7 | 4.7 | 11.3 |
| Comparative Example 8 | 54.1 | 35.0 | 2.6 | 8.3 | 13.5 | 20.8 |
| Comparative Example 9 | 66.5 | 19.8 | 10.1 | 3.6 | 2.0 | 6.6 |
| Comparative Example 10 | 64.1 | 20.1 | 0.1 | 14.6 | 201.0 | 641.0 |
| Inventive Example 1 | 62.8 | 21.9 | 7.4 | 7.9 | 3.0 | 8.5 |
| Inventive Example 2 | 62.7 | 21.1 | 10.8 | 5.4 | 2.0 | 5.8 |
| Inventive Example 3 | 60.5 | 22.5 | 10.3 | 6.7 | 2.2 | 5.9 |
| Inventive Example 4 | 60.4 | 25.9 | 9.9 | 3.8 | 2.6 | 6.1 |
| Inventive Example 5 | 58.3 | 24.1 | 13.1 | 4.6 | 1.8 | 4.4 |
| Inventive Example 6 | 55.3 | 31.2 | 7.0 | 6.5 | 4.5 | 7.9 |

After collecting a specimen of the plated steel sheet manufactured by the above-described method, the specimen was cut into a blank, and the blank specimen was kept in a furnace at a temperature of 900°C for 2 minutes after reaching 900°C. Thereafter, the heated blank specimen was transferred to a mold within 20 seconds, hot-formed using the mold, and then cooled at a cooling rate of 20°C/s to obtain a hot forming member.

Subsequently, whether LME occurs, corrosion resistance after hot press forming, whether peeling occurs at an interface between base steel and a plating layer before hot forming, and plating adhesion after hot press forming were evaluated based on the following criteria, respectively, which were shown in Table 3 below.

[Whether LME occurs]

A depth of cracks of a base material was measured by observing a cross-section in a thickness direction (meaning a direction perpendicular to a rolling direction) of each specimen subjected to hot press forming using an optical microscope. In this case, a case in which the depth of cracks of the base material was 30 μm or more was indicated as a specimen in which 'LME occurs'.

[Corrosion resistance after hot press forming]

After the specimen was heat treated and reached 900°C, and then held for 2 minutes and subjected to rapid cooling was evaluated using a salt spray test (SST), which is one of accelerated corrosion evaluations. That is, a corrosion product of the specimen subjected to salt spray for 30 days in the SST were removed by shot blast, and then a maximum depth of the crack created by corrosion in the base steel was measured.

○: When a depth of cracks was 30% or less of a thickness of a base material
×: When a depth of cracks exceeded 30% of a thickness of a base material

[Whether peeling occurred at an interface between base steel and a plating layer]

In order to evaluate whether peeling occurs at an interface between a base steel and a plating layer, after performing a 90° bending process on a specimen of a plated steel sheet before hot press forming, whether peeling occurs due to a highly brittle Fe-Al-based interfacial alloy layer at the interface between the base steel and the plating layer was evaluated. A case in which whether peeling occurs was indicated as 'peeling'.

[Plating adhesion after hot press forming]

After the specimen was heat treated and reached 900°C, and then the specimen heated for 2 minutes was pressed and a peeling phenomenon of the plating layer occurring on the surface was measured. Among the specimens, a major axis length of an area, separated from a component was measured and evaluated based on the following criteria.

◎: A major axis length of the peeled area is less than 1 mm

○: A major axis length of the peeled area is 1 mm or more but less than 3 mm

×: A major axis length of the peeled area is 3 mm or more

[Table 3]

| No. | Whether LME occurs | Corrosion resistance after hot press forming | Whether peeling occurs at an interface between base steel and plating layer | Plating adhesion after hot press forming |
| --- | --- | --- | --- | --- |
| Comparative Example 1 | - | × | - | × |
| Comparative Example 2 | - | ○ | - | × |
| Comparative Example 3 | - | ○ | - | × |
| Comparative Example 4 | - | × | Peeling Occurred | × |
| Comparative Example 5 | - | × | Peeling Occurred | × |
| Comparative Example 6 | - | ○ | - | × |
| Comparative Example 7 | - | ○ | - | × |
| Comparative Example 8 | LME occurs | ○ | Peeling Occurred | × |
| Comparative Example 9 | - | × | Peeling Occurred | × |
| Comparative Example 10 | - | ○ | Peeling Occurred | × |
| Inventive Example 1 | - | ○ | - | ○ |
| Inventive Example 2 | - | ○ | - | ○ |
| Inventive Example 3 | - | ○ | - | ○ |

(continued)

| No. | Whether LME occurs | Corrosion resistance after hot press forming | Whether peeling occurs at an interface between base steel and plating layer | Plating adhesion after hot press forming |
|---|---|---|---|---|
| Inventive Example 4 | - | ○ | - | ○ |
| Inventive Example 5 | - | ○ | - | ○ |
| Inventive Example 6 | - | ○ | - | ○ |

As can be seen in Table 3, in Inventive Examples satisfying all of the composition of the plating layer, Relational expression 1, Relational expression 2, and manufacturing conditions, defined in the present disclosure, it was confirmed that occurrence of LME was suppressed, no peeling occurred at the interface between the base steel and the plating layer, and both corrosion resistance after hot press forming and plating adhesion after hot press forming were excellent.

On the other hand, in Comparative Examples 1 to 9, not satisfying one or more of the composition of the plating layer, Relational expression 1, Relational expression 2, and manufacturing conditions, defined in the present disclosure, it was confirmed that at least one of the following characteristics: LME characteristics, whether peeling occurred at the interface between the base steel and the plating layer, corrosion resistance after hot press forming, and plating adhesion after hot press forming, was inferior.

(Experimental Example 2)

A plated steel sheet for hot press forming was manufactured in the same manner as in Experimental Example 1 described above, except that the base steel was heat treated at 750°C in an annealing furnace with a dew point temperature of -50°C, and a mixed atmosphere of 5% hydrogen and 95% nitrogen, and a hot-dip plating layer was cooled under the conditions shown in Table 4 after plating.

[Table 4]

| No. | Plating bath composition [wt%] a remainder of impurities) | | | | Plating bath melting point (Tb) [°C] | Plating bath temperature [°C] | Plating amount per side [g/m$^2$] | Vc1* [°C/s] | Vc2* [°C/s] |
|---|---|---|---|---|---|---|---|---|---|
| | Al | Zn | Si | Fe | | | | | |
| Comparative Example 11 | 77 | 16.5 | 5.7 | 0.7 | 587 | 620 | 94 | 60 | 5 |
| Comparative Example 12 | 73 | 22.1 | 4.1 | 0.6 | 585 | 620 | 123 | 60 | 5 |
| Comparative Example 13 | 67 | 27.5 | 4.7 | 0.7 | 567 | 610 | 93 | 50 | 10 |
| Comparative Example 14 | 72 | 25.4 | 2.0 | 0.8 | 594 | 620 | 102 | 60 | 5 |
| Comparative Example 15 | 73 | 25.9 | 1.1 | 0.2 | 600 | 630 | 106 | 60 | 10 |
| Comparative Example 16 | 65 | 29.2 | 5.6 | 0.6 | 555 | 590 | 43 | 30 | 5 |
| Comparative Example 17 | 65 | 29.5 | 5.0 | 0.7 | 559 | 590 | 61 | 30 | 5 |
| Comparative Example 18 | 59 | 38.0 | 2.0 | 0.8 | 565 | 600 | 81 | 40 | 5 |
| Inventive Example 7 | 70 | 22.6 | 6.7 | 0.5 | 563 | 620 | 37 | 60 | 5 |
| Inventive Example 8 | 69 | 21.5 | 9.3 | 0.2 | 568 | 630 | 37 | 70 | 10 |
| Inventive Example 9 | 64 | 27.0 | 8.1 | 0.8 | 558 | 600 | 58 | 40 | 5 |
| Inventive Example 10 | 64 | 27.0 | 8.1 | 0.8 | 558 | 600 | 98 | 80 | 5 |
| Inventive Example 11 | 61 | 26.1 | 12.5 | 0.6 | 639 | 670 | 60 | 80 | 10 |

(continued)

| No. | Plating bath composition [wt%] a remainder of impurities) | | | | Plating bath melting point (Tb) [°C] | Plating bath temperature [°C] | Plating amount per side [g/m²] | Vc1* [°C/s] | Vc2* [°C/s] |
|---|---|---|---|---|---|---|---|---|---|
| | Al | Zn | Si | Fe | | | | | |
| Inventive Example 12 | 61 | 32.0 | 6.8 | 0.7 | 539 | 590 | 93 | 305 | 5 |
| Vc1*: Average cooling rate in a range of 630 to 530°C, based on a surface temperature of a hot-dip plating layer<br>Vc2*: Average cooling rate in a range of 530 to 350°C, based on a surface temperature of a hot-dip plating layer | | | | | | | | | |

In the same manner as Experimental Example 1, the plating layer composition of the plated steel sheets for hot press forming obtained from the respective Inventive Examples and Examples was analyzed and shown in Table 5 below.

[Table 5]

| No. | Plating layer composition [wt%] | | | | | |
|---|---|---|---|---|---|---|
| | Al | Zn | Si | Fe | [Zn]/[Si] | [Al]/[Si] |
| Comparati ve Example 11 | 77.6 | 14.9 | 4.2 | 3.3 | 3.5 | 18.5 |
| Comparati ve Example 12 | 69.4 | 24.0 | 3.8 | 2.8 | 6.3 | 18.3 |
| Comparati ve Example 13 | 67.4 | 26.3 | 3.6 | 2.7 | 7.3 | 18.7 |
| Comparati ve Example 14 | 72.5 | 17.3 | 2.5 | 7.7 | 6.9 | 29.0 |
| Comparati ve Example 15 | 73.9 | 17.0 | 1.5 | 6.6 | 11.3 | 49.9 |
| Comparati ve Example 16 | 58.1 | 32.3 | 5.9 | 3.7 | 5.5 | 9.8 |
| Comparati ve Example 17 | 63.3 | 26.5 | 5.6 | 4.7 | 4.7 | 11.3 |
| Comparati ve Example 18 | 54.1 | 35.0 | 2.6 | 8.3 | 13.5 | 20.8 |
| Inventive Example 7 | 59.5 | 21.9 | 7.4 | 11.2 | 3.0 | 8.0 |
| Inventive Example 8 | 59.1 | 21.1 | 10.8 | 9.0 | 2.0 | 5.5 |
| Inventive Example 9 | 60.5 | 22.5 | 10.3 | 6.7 | 2.2 | 5.9 |
| Inventive Example 10 | 60.4 | 25.9 | 9.9 | 3.8 | 2.6 | 6.1 |
| Inventive Example 11 | 58.3 | 24.1 | 13.1 | 4.6 | 1.8 | 4.4 |
| Inventive Example 12 | 55.3 | 31.2 | 7.0 | 6.5 | 4.5 | 7.9 |

Subsequently, after creating a cross-sectional specimen cut in a thickness direction (meaning a direction perpendicular to a rolling direction of the steel sheet) for each of the above-described plated steel sheets, and then observed using a scanning electron microscope (SEM). Thereby, it was confirmed that a plating layer is formed on base steel, an Fe-Al-based interfacial alloy layer, in contact with the base steel is formed as the plating layer, and an Al-Zn plating layer is formed on the Fe-Al-based interfacial alloy layer.

In addition, for the plating layer of each plated steel sheet, an average value of Si at points, 1/2t from a total thickness t of the plating layer, was measured using GDS, and was indicated as Sa below. In addition, a cross-sectional specimen in the thickness direction of each plated steel sheet was observed with an electron microscope, and the Fe-Al-based interfacial alloy layer formed adjacent to base steel was subjected to EDS point analysis at least three times, and an average of the measured values was indicated as Sb below.

In addition, for the cross-sectional specimen, through SEM and EDS point analysis in the same manner as described above, it was measured whether there was a region (C) in which the Si content was concentrated at 40% or more compared to the average Si content of the Al-Zn-based plating layer per unit area of 100 $\mu m^2$ of the plating layer. In addition, similarly, using SEM and EDS, a Si phase containing 40 to 99.9% of Si was detected, and an area fraction (D) of the Si phase was measured based on the cross-section of the plating layer. In this case, the value of D was measured in a region in which the total length in the rolling direction was 75 um or more. These measured values were shown in Table 6 below.

[Table 6]

| No. | Sa* | Sb* | Sb/Sa | C* | D* |
|---|---|---|---|---|---|
| Comparativ e Example 11 | 3.4 | 13.0 | 3.8 | ✕ | - |
| Comparativ e Example 12 | 3.2 | 10.4 | 3.2 | ✕ | - |
| Comparativ e Example 13 | 2.8 | 16.4 | 5.8 | ✕ | - |
| Comparativ e Example 14 | 2.2 | 12.7 | 5.9 | ✕ | - |
| Comparativ e Example 15 | 1.0 | 10.3 | 10.0 | ✕ | - |
| Comparativ e Example 16 | 5.1 | 18.0 | 3.5 | ✕ | - |
| Comparativ e Example 17 | 4.9 | 15.8 | 3.2 | ✕ | - |
| Comparativ e Example 18 | 2.2 | 12.4 | 5.6 | ✕ | - |
| Inventive Example 7 | 5.9 | 17.6 | 3.0 | ○ | 4 |
| Inventive Example 8 | 10.3 | 12.0 | 1.2 | ○ | 12 |
| Inventive Example 9 | 9.6 | 18.1 | 1.9 | ○ | 10 |
| Inventive Example 10 | 9.5 | 13.0 | 1.4 | ○ | 7 |
| Inventive Example 11 | 8.6 | 16.7 | 1.9 | ○ | 19 |
| Inventive Example 12 | 6.3 | 15.4 | 2.4 | ○ | 5 |

Sa*: Average Si content in Al-Zn-based plating layer [wt%]
Sb*: Average Si content in Fe-Al-based alloy layer [wt%]
C*: Based on a cross-section (a direction perpendicular to a rolling direction) of the Al-Zn-based plating layer in the thickness direction, whether there is a region in which the Si content is concentrated at 40% or more, as compared to the average Si content of the plating layer, per unit area of 100 $\mu m^2$ [○/✕]
D*: Area fraction of Si phase [%], based on the cross-section of the Al-Zn-based plating layer in the thickness direction

For each plated steel sheet obtained in this manner, the characteristics shown in Table 7 below were evaluated in the same manner as in Experimental Example 1. In addition, surface quality characteristics were further evaluated based on the following criteria and were shown in Table 7.

[Surface quality]

A specimen was observed with the naked eye to evaluate whether there was a difference in surface colors and whether overall staining was found due to excessively generated zinc oxide on the surface, and was evaluated based on the following criteria.
Good: No difference in surface colors or surface stains observed
Difference in surface colors: There is a region on the surface of 50 $mm^2$ or more which is different in color from a surrounding region
Surface stains: stains observed on the surface

[Table 7]

| No. | LME cracks | Corrosion resistance after hot press forming | Whether peeling occurs at an interface between base steel and a plating layer | Plating adhesion after hot press forming | Surface quality |
|---|---|---|---|---|---|
| Comparati ve Example 11 | - | ✕ | - | ✕ | Good |
| Comparati ve Example 12 | - | ○ | - | ✕ | Good |

(continued)

| No. | LME cracks | Corrosion resistance after hot press forming | Whether peeling occurs at an interface between base steel and a plating layer | Plating adhesion after hot press forming | Surface quality |
|---|---|---|---|---|---|
| Comparative Example 13 | - | ○ | - | × | Good |
| Comparative Example 14 | - | × | Peeling Occurred | × | Difference in surface colors |
| Comparative Example 15 | - | × | Peeling Occurred | × | Difference in surface colors |
| Comparative Example 16 | - | ○ | - | × | Good |
| Comparative Example 17 | - | ○ | - | × | Good |
| Comparative Example 18 | LME cracks occur | ○ | Peeling Occurred | × | Surface stains |
| Inventive Example 7 | - | ○ | Peeling Occurred | ◎ | Good |
| Inventive Example 8 | - | ○ | Peeling Occurred | ◎ | Good |
| Inventive Example 9 | - | ○ | - | ◎ | Good |
| Inventive Example 10 | - | ○ | - | ◎ | Good |
| Inventive Example 11 | - | ○ | - | ◎ | Good |
| Inventive Example 12 | - | ○ | - | ◎ | Good |

As can be seen in Table 7 above, in Inventive Example not only satisfying the plating layer composition, Relational expression 1, and Relational expression 2, defined in the present disclosure, but also satisfying one or more of a value of Sb/Sa, defined in Table 6 of 1 to 3.1 and C, and 3 to 30% of D, it was confirmed that not only LME, corrosion resistance, plating adhesion, and surface quality, but also surface properties were very excellent.

In particular, an image taken by observing a cross-sectional specimen in the thickness direction of the plated steel sheet obtained in Inventive Example 11 using a scanning electron microscope (SEM) was shown in FIG. 1. Thereby, it was confirmed that there is a region in which the Si content is concentrated at 40% or more in the plating layer as compared to the average Si content of the plating layer, and the plating layer includes by area fraction, an Si phase having a Si content of 40% or more in an amount of 3 to 30%.

On the other hand, in Comparative Examples not satisfying one or more of the compositions of the plating layer defined in the present disclosure, Relational expressions 1 and 2, and a value of Sb/Sa, C, and 3 to 30% of D, it was confirmed that one or more of the above-described characteristics was inferior.

**EP 4 474 516 A1**

**Claims**

1. A plated steel sheet for hot press forming, comprising:

   a base steel; and
   a plating layer on at least one surface of the base steel;
   wherein the plating layer comprises by weight%: 21 to 34% of Zn, 6.3 to 15% of Si, 3 to 13% of Fe, with a balance of Al and other inevitable impurities, and
   wherein the following Relational expressions 1 and 2 are satisfied,

   [Relational expression 1]

   $$0.09 \leq [Zn]/[Si] \leq 4.8$$

   [Relational expression 2]

   $$3.6 \leq [Al]/[Si] \leq 8.5$$

   in Relational expressions 1 and 2, where [Zn] represents an average content, weight%, of Zn in the plating layer, [Si] represents an average content, weight%, of Si in the plating layer, and [Al] represents an average content, weight%, of Al in the plating layer.

2. The plated steel sheet for hot press forming of claim 1, wherein the plating layer comprises by weight%, 25 to 34% of Zn.

3. The plated steel sheet for hot press forming of claim 1, wherein the plating layer comprises

   an Al-Zn-based plating layer; and
   a Fe-Al-based interfacial alloy layer between the Al-Zn-based plating layer and the base steel.

4. The plated steel sheet for hot press forming of claim 3, wherein a weight ratio (Sb/Sa) of an average Si content (Sb) in the Fe-Al-based alloy layer and an average Si content (Sa) in the Al-Zn-based plating layer is 1 to 3.1.

5. The plated steel sheet for hot press forming of claim 3, wherein, based on a cross-section of the Al-Zn-based plating layer in a thickness direction, the plating layer comprises a region in which the Si content is concentrated at 40% or more as compared to the average Si content of the Al-Zn-based plating layer per unit area of 100 $\mu$m$^2$ of the plating layer.

6. The plated steel sheet for hot press forming of claim 3, wherein, based on the cross-section of the Al-Zn-based plating layer in the thickness direction, the plating layer comprises by area fraction, a Si phase in an amount of 3 to 30%.

7. The plated steel sheet for hot press forming of claim 6, wherein the Si phase comprises by weight%, 40 to 99.9% of Si.

8. A method for manufacturing a plated steel sheet for hot press forming, the method comprising,

   a plating operation of immersing a base steel in a plating bath comprising, by weight%: 21 to 34% of Zn, 6.5 to 15% of Si, 2% or less (including 0%) of Fe, with a balance of Al and other unavoidable impurities, wherein the following Relational expressions 1 and 2 are satisfied, to obtain a steel sheet having a hot-dip plating layer formed on the surface,

   [Relational expression 1]

   $$0.09 \leq [Zn]/[Si] \leq 4.8$$

[Relational expression 2]

$$3.6 \leq [Al]/[Si] \leq 8.5$$

in Relational expressions 1 and 2, where [Zn] represents an average content, weight%, of Zn in the hot-dip plating layer, [Si] represents an average content, weight%, of Si in the hot-dip plating layer, and [Al] represents an average content, weight%, of Al in the hot-dip plating layer.

9. The method for manufacturing a plated steel sheet for hot press forming of claim 8, further comprising, after the plating operation, based on a surface temperature of a hot-dip plating layer for the steel sheet,
   cooling the steel sheet to satisfy an average cooling rate Vc1 of 25 to 90°C/s in a first section in which the temperature is 630 to 530°C, and an average cooling rate Vc2 of 3 to 15°C/s in a second section in which the temperature is 529 to 350°C.

10. The method for manufacturing a plated steel sheet for hot press forming of claim 8, wherein the following Relational expression 3 is satisfied,

[Relational expression 3]

$$Vc2 \leq Vc1/7$$

11. The method for manufacturing a plated steel sheet for hot press forming of claim 8, further comprising, before the plating operation,
    heat treating the base steel in an annealing furnace in which a temperature is 650 to 850°C, a dew point temperature is -30 to -60°C, and a hydrogen ratio is 0.1 to 30%.

12. The method for manufacturing a plated steel sheet for hot press forming of claim 8, wherein a temperature of the plating bath is controlled to be Tb+20°C to Tb+80°C, based on a plating bath melting point (Tb).

13. A hot press forming member obtained by hot press forming the plated steel sheet for hot press forming of claim 1.

14. A method for manufacturing a hot press forming member comprising:

    heat treating the plated steel sheet for hot press forming of claim 1 at a temperature within a range of Ac3 to 950°C for 1 to 1000 seconds; and
    hot press forming the heat-treated plated steel sheet for hot press forming using a mold.

FIG. 1

## INTERNATIONAL SEARCH REPORT

| International application No. |
|---|
| **PCT/KR2022/001693** |

### A. CLASSIFICATION OF SUBJECT MATTER

**C23C 2/12**(2006.01)i; **C23C 2/40**(2006.01)i; **C23C 2/02**(2006.01)i; **C23C 2/26**(2006.01)i; **C22C 21/10**(2006.01)i; **B21D 22/00**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/00(2006.01); C22C 38/00(2006.01); C23C 2/04(2006.01); C23C 2/06(2006.01); C23C 2/26(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열간 프레스 성형(hot press forming), 도금강판(plated steel sheet), 아연(Zn), 실리콘(Si), 철(Fe)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0078438 A (POSCO) 04 July 2019 (2019-07-04) See paragraphs [0105], [0114] and [0116], claims 1, 8 and 12 and table 1. | 1-10,12-14 |
| Y | | 11 |
| Y | KR 10-1639843 B1 (POSCO) 14 July 2016 (2016-07-14) See paragraph [0059] and claims 6-8. | 11 |
| A | WO 2017-195269 A1 (NIPPON STEEL & SUMITOMO METAL CORPORATION) 16 November 2017 (2017-11-16) See paragraphs [0051]-[0058]. | 1-14 |
| A | KR 10-2013-0002228 A (POSCO) 07 January 2013 (2013-01-07) See claims 1-3. | 1-14 |

✓ Further documents are listed in the continuation of Box C.     ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2022** | **26 October 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/001693** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2012-012649 A (NIPPON STEEL CORP.) 19 January 2012 (2012-01-19)<br>See claims 1-4. | 1-14 |
| E | KR 10-2022-0089439 A (POSCO) 28 June 2022 (2022-06-28)<br>See claims 1-14. | 1-14 |

Form PCT/ISA/210 (second sheet) (July 2019)

## INTERNATIONAL SEARCH REPORT
### Information on patent family members

International application No.

**PCT/KR2022/001693**

| Patent document cited in search report | | | Publication date (day/month/year) | Patent family member(s) | | | Publication date (day/month/year) |
|---|---|---|---|---|---|---|---|
| KR | 10-2019-0078438 | A | 04 July 2019 | CN | 111527233 | A | 11 August 2020 |
| | | | | EP | 3733922 | A1 | 04 November 2020 |
| | | | | JP | 2021-509437 | A | 25 March 2021 |
| | | | | KR | 10-2153164 | B1 | 07 September 2020 |
| | | | | US | 11358369 | B2 | 14 June 2022 |
| | | | | US | 2021-0008837 | A1 | 14 January 2021 |
| | | | | WO | 2019-132461 | A1 | 04 July 2019 |
| KR | 10-1639843 | B1 | 14 July 2016 | KR | 10-2015-0074882 | A | 02 July 2015 |
| WO | 2017-195269 | A1 | 16 November 2017 | BR | 112018071451 | A2 | 05 February 2019 |
| | | | | CA | 3020663 | A1 | 16 November 2017 |
| | | | | CA | 3020663 | C | 02 June 2020 |
| | | | | CN | 109072396 | A | 21 December 2018 |
| | | | | EP | 3456854 | A1 | 20 March 2019 |
| | | | | JP | 6566128 | B2 | 28 August 2019 |
| | | | | KR | 10-2018-0131589 | A | 10 December 2018 |
| | | | | MX | 2018013464 | A | 28 February 2019 |
| | | | | RU | 2710813 | C1 | 14 January 2020 |
| | | | | US | 2019-0160507 | A1 | 30 May 2019 |
| | | | | WO | 2017-195269 | A1 | 24 January 2019 |
| KR | 10-2013-0002228 | A | 07 January 2013 | KR | 10-1359183 | B1 | 06 February 2014 |
| JP | 2012-012649 | A | 19 January 2012 | JP | 5505132 | B2 | 28 May 2014 |
| KR | 10-2022-0089439 | A | 28 June 2022 | None | | | |

Form PCT/ISA/210 (patent family annex) (July 2019)

**REFERENCES CITED IN THE DESCRIPTION**

**Patent documents cited in the description**

- US 6296805 B